# EUROPÄISCHE PATENTSCHRIFT

(11) **EP 3 277 519 B1**
(45) Veröffentlichungstag und Bekanntmachung des Hinweises auf die Patenterteilung: **06.04.2022**
(21) Anmeldenummer: 16707632.2
(22) Anmeldetag: 29.02.2016
(51) Int. Cl.: B66F 9/06, B60B 19/00, B66F 9/075, B65G 1/04

(54) **LAGERSYSTEM MIT EINEM OMNIDIREKTIONALEN FAHRZEUG UND VERFAHREN ZUM BETREIBEN EINES SOLCHEN LAGERSYSTEMS**
STORAGE SYSTEM COCMPRISING AN OMNI-DIRECTIONAL VEHCILE AND METHOD FOR OPERATING SUCH A STORAGE SYSTEM
SYSTÈME D'ENTREPOSAGE À VÉHICULE OMINIDIRECTIONNEL ET PROCÉDÉ PERMETTANT DE FAIRE FONCTIONNER UN TEL SYSTÈME

(30) Priorität: 01.04.2015 DE 102015004135
(43) Veröffentlichungstag der Anmeldung: 07.02.2018
(73) Patentinhaber: SEW-EURODRIVE GmbH & Co. KG, 76646 Bruchsal (DE)
(72) Erfinder: SCHMIDT, Josef, 76676 Graben-Neudorf (DE); DEGEN, Dirk, 76646 Bruchsal (DE)
(86) Internationale Anmeldenummer: PCT/EP2016/000348
(87) Internationale Veröffentlichungsnummer: WO 2016/155862

(56) Entgegenhaltungen:
- EP-A1- 1 254 852
- WO-A1-2011/104716
- WO-A1-2015/107527
- CA-A1- 2 804 373
- CN-A- 101 613 066
- CN-A- 104 192 320
- DE-A1-102014 112 269
- FR-A1- 3 015 915
- US-A1- 2008 087 484
- US-A1- 2008 185 222
- US-A1- 2014 365 061
- Ioan Doroftei ET AL: "Omnidirectional Mobile Robot - Design and Implementation" In: "Bioinspiration and Robotics: Walking and Climbing Robots", 1. September 2007 (2007-09-01), I-Tech Education and Publishing, AT, XP055274092, ISBN: 978-3-902613-15-8 Seiten 511-528, Seite 511 - Seite 514 Seite 521 - Seite 522 Seite 524 Seite 527

## Beschreibung

Die Erfindung betrifft ein Lagersystem und Verfahren zum Betreiben eines Lagersystems mit einem Fahrzeug.

Aus http://de.wikipedia.org/wiki/Mecanum-Rad ist bekannt, dass das Mecanum-Rad ein Rad ist, das einem damit ausgestatteten Fahrzeug omnidirektionale Fahrmanöver erlaubt, ohne mit einer mechanischen Lenkung ausgestattet sein zu müssen. Es wird manchmal nach seinem schwedischen Erfinder Bengt Ilon auch Ilon-Rad genannt. Ilon erfand dieses Rad 1973 als Ingenieur bei der schwedischen Firma Mecanum AB. Im Gegensatz zum Allseitenrad stehen beim Mecanum-Rad die Rollen in einem Winkel zur Hauptachse.

Im Folgenden werden sowohl das Mecanum-Rad als auch das Allseitenrad als omnidirektionales Rad bezeichnet. Dieses omnidirektionale Rad erlaubt entsprechend omnidirektionale Fahrmanöver.

Aus der WO 2011/104716 A1 ist als nächstliegender Stand der Technik ein Containerlager mit Fahrzeug bekannt, das omnidirektionale Räder aufweist. Die WO 2011/104716 A1 offenbart in der Tat ein Lagersystem nach dem Oberbegriff des Anspruchs 1.

Aus der Veröffentlichung von loan Doroftei ET AL: "Omnidirectional Mobil Robot-Design and Implementation" in: "Bioinspiration and Robotics: Walking and Climbing Robots", 1. September 2007, I-Tech Education and Publishing, AT, XP 055274092, ISBN: 978-3-902613-15-8 Seite 511 - 528 ist ein omnidirektional bewegbarer Roboter bekannt.

Aus der CN 101 613 066 A ist ein Fahrzeug mit omnidirektionalen Rädern bekannt. Aus der US 2014/365061 A1 ist ein Verfahren zum roboterisierten Ausmessen von Teilen bekannt, wobei ein omnidirektionales Transportfahrzeug eingesetzt wird.

Aus der US 2008/087484 A1 ist ein Stapler mit omnidirektionalen Rädern bekannt.

Aus der CN 104 192 320 A ist ein omnidirektionale Räder aufweisendes Fahrzeug zum Transport von gelagerten Raketen bekannt.

Aus der US 2008/185222 A1 ist ein Fahrzeug mit einer Arbeitsplattform bekannt, das omnidirektionale Räder aufweist.

Aus der EP 1 254 852 A1 ist ein Lagersystem in modularer Bauweise bekannt.

Der Erfindung liegt daher die Aufgabe zugrunde, ein Regallager möglichst effektiv zu gestalten und/oder zu betreiben.

Erfindungsgemäß wird die Aufgabe bei dem Lagersystem nach den in Anspruch 1 und bei dem Verfahren zum Betreiben eines Lagersystems mit einem Fahrzeug nach den in Anspruch **6** angegebenen Merkmalen gelöst.

Wichtige Merkmale der Erfindung bei dem Lagersystem mit einem Fahrzeug sind, dass das Fahrzeug omnidirektionale Räder aufweist.

Von Vorteil ist dabei, dass die Breite einer Gasse der Länge des Fahrzeugs und die Breite einer in Querrichtung verlaufenden Gasse der Breite des Fahrzeugs entsprechen darf. Somit ist ein sehr raumsparender Aufbau ermöglicht. Denn das Fahrzeug ist in der Lage, ohne Verdrehung des Fahrzeugs die Fahrtrichtung zu ändern, insbesondere von Geradeausfahrt in Querfahrt. Es sind dieselben Räder für den gesamten Betrieb verwendbar. Räder müssen also nicht ausgetauscht oder verändert werden.

Nach der Erfindung weist jedes omnidirektionale Rad einen Antrieb auf. Von Vorteil ist dabei, dass eine genaue und präzise Steuerung der Fahrtrichtung ermöglicht ist.

Bei einer vorteilhaften Ausgestaltung weist das Fahrzeug eine Länge und eine Breite auf, wobei der Betrag der Länge größer ist der Betrag der Breite. Von Vorteil ist dabei, dass die Gassen entsprechend breit ausführbar sind.

Bei einer vorteilhaften Ausgestaltung ist eine Hauptgasse mindestens so breit wie die Länge. Von Vorteil ist dabei, dass eine raumsparende Ausführung des Hochregallagers ausführbar ist.

Bei einer vorteilhaften Ausgestaltung ist eine Nebengasse mindestens so breit wie die Breite und weniger breit wie die Länge. Von Vorteil ist dabei, dass eine raumsparende Ausführung des Hochregallagers ausführbar ist. Nach der Erfindung ist an der Unterseite des Fahrzeugs eine Sekundärwicklung angeordnet, die mit einem in einer Hebebühne angeordneten und/oder mit einem in einer Gasse angeordneten Primärleiters induktiv koppelbar ist, wobei eine Kapazität mit der Sekundärwicklung derart in Reihe oder parallel zugeschaltet ist, dass die Resonanzfrequenz des so gebildeten Schwingkreises im Wesentlichen der Frequenz des in den Primärleiter eingeprägten Stromes entspricht. Von Vorteil ist dabei, dass ein Beladen des Energiespeichers und/oder versorgen der elektrischen Verbraucher des Fahrzeugs während der Geradeausfahrt, beispielsweise Hauptgassenfahrt, oder während der Fahrt im Lift ausführbar ist.

Bei einer vorteilhaften Ausgestaltung weist das Fahrzeug ein Hubwerk auf, so dass eine Last durch Unterfahren mit dem Fahrzeug und nachfolgendem Anheben des Hubwerks ausführbar ist. Von Vorteil ist dabei, dass ein einfaches Lastaufnehmen und Lastabgeben ermöglicht ist.

Wichtige Merkmale der Erfindung bei dem Verfahren zum Betreiben eines Lagersystems nach einer ersten Alternative des Anspruchs 6 sind, dass das Fahrzeug von einer Geradeausfahrt über eine Kurve in eine Querfahrt gebracht wird, wobei das Fahrzeug relativ zu stationär angeordneten Teile des Lagersystems nicht gedreht wird.

Von Vorteil ist dabei, dass eine raumsparende Ausführung des Lagersystems, insbesondere Hochregallagers, ausführbar ist. Außerdem ist ein schneller ruckarmer Betrieb ermöglicht. Wichtige Merkmale der Erfindung bei dem Verfahren zum Betreiben eines Lagersystems nach einer zweiten Alternative des Anspruchs 6 das Fahrzeug von einer Geradeausfahrt durch Abbremsen, Anhalten und nachfolgendes Beschleunigen in Querrichtung in eine Querfahrt gebracht wird, wobei das Fahrzeug relativ zu stationär angeordneten Teile des Lagersystems nicht gedreht wird.

Von Vorteil ist dabei, dass eine raumsparende Ausführung des Lagersystems, insbesondere Hochregallagers, ausführbar ist. Insbesondere ist kein Raumbereich für Kurvenfahrt notwendig.

Weitere Vorteile ergeben sich aus den Unteransprüchen. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

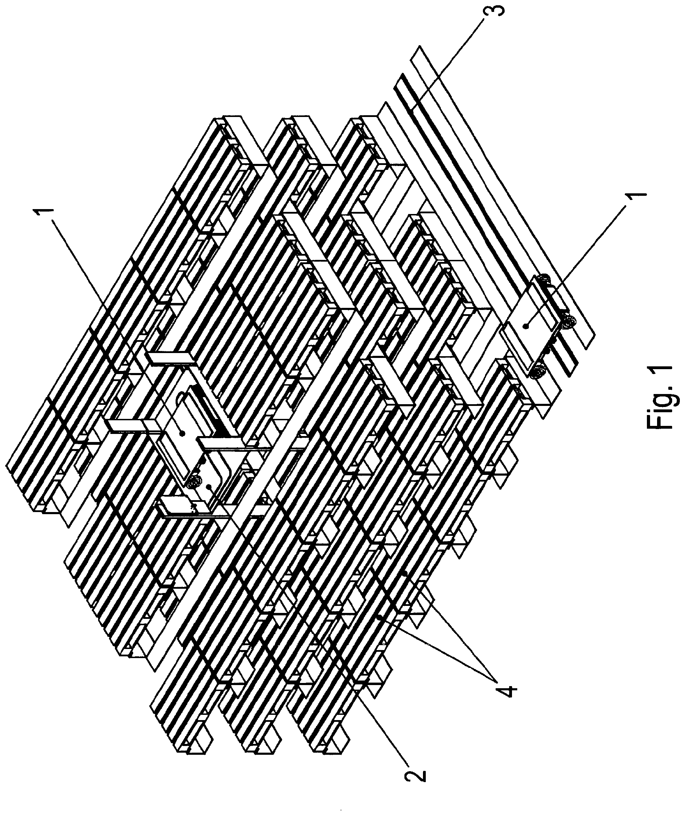

In der Figur 1 ist ein erfindungsgemäßes Regallager in Schrägansicht gezeigt, wobei Lasten 4 von Fahrzeugen 1 aufnehmbar sind, insbesondere durch Unterfahren und Anheben einer Oberplatte des Fahrzeugs. Dabei hat das Regallager mehrere Stockwerke und einen Lift für die Fahrzeuge 1.

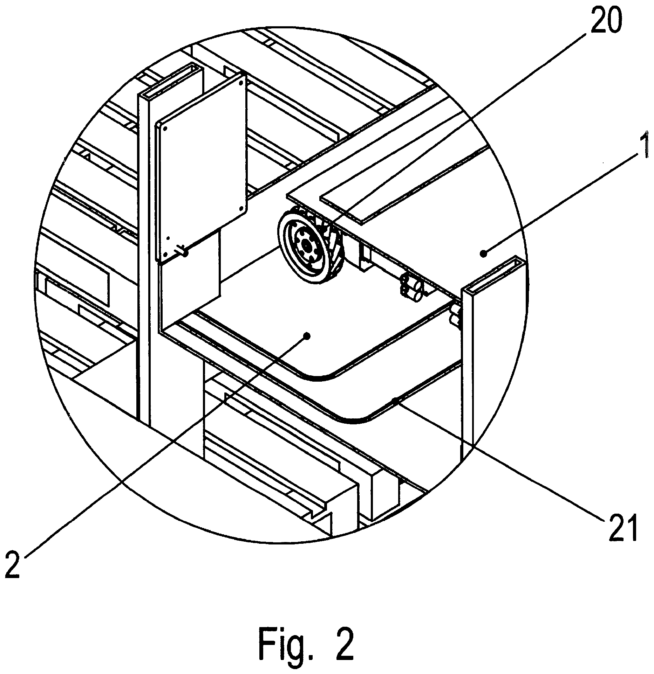

In der Figur 2 ist ein vergrößerter Ausschnitt eines auf einer Hebebühne 2 angeordneten Fahrzeugs 1 in Schrägansicht gezeigt.

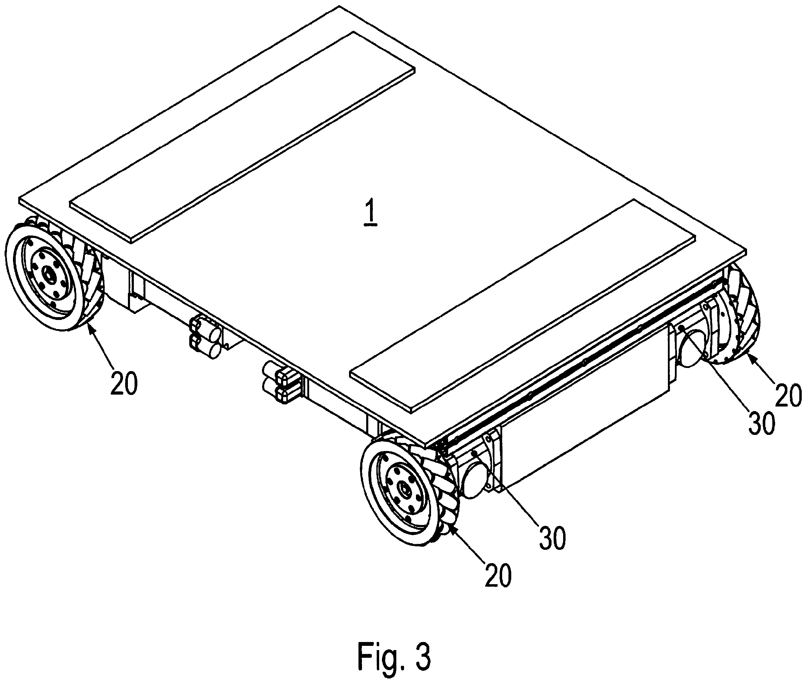

In der Figur 3 ist das Fahrzeug 1 mit vier omnidirektionalen Rädern 20 in Schrägansicht gezeigt.

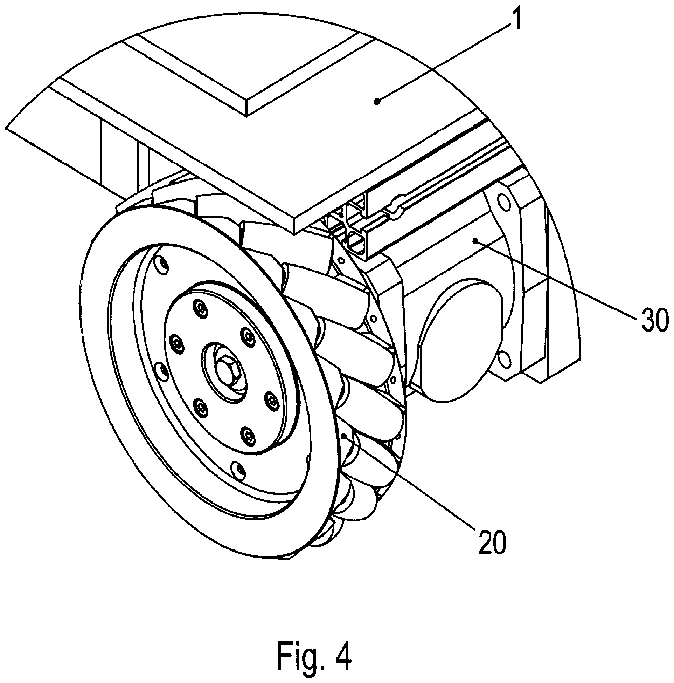

In der Figur 4 ist ein vergrößerter Ausschnitt in Schrägansicht gezeigt.

In der Figur 5 ist die Bahnkurve 50 des Fahrzeugs 1 beim Abbiegen von der Hauptgassenfahrt zur Nebengassenfahrt nach der Erfindung dargestellt, wobei das Fahrzeug 1 sich nicht dreht und der Schwerpunkt des Fahrzeugs sich aber auf der Bahnkurve 50 bewegt.

Wie in den Figuren gezeigt, weist das Regallager mehrere Stockwerke auf, die über einen Lift erreichbar sind.

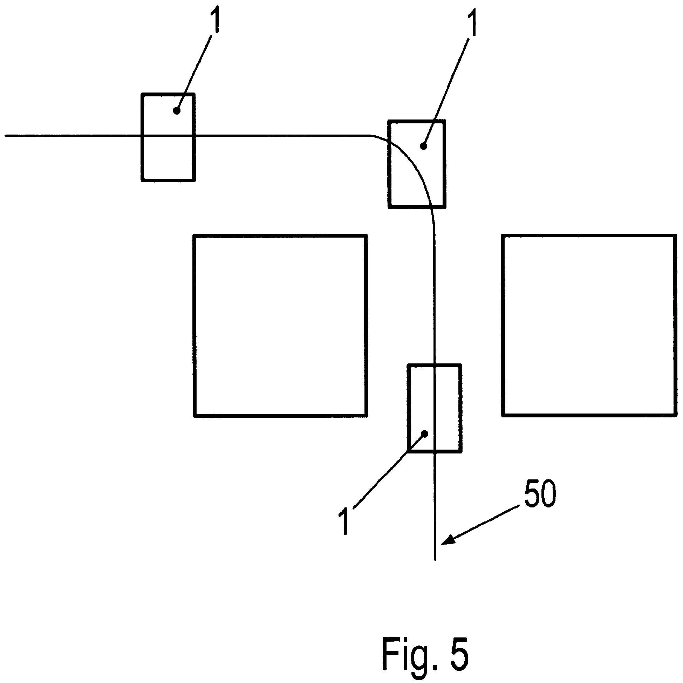

Die Fahrzeuge 1 fahren zunächst in der Hauptgasse geradeaus und biegen dann in eine Nebengasse ab, die senkrecht zur Hauptgasse ausgerichtet ist. Wie in Figur 5 gezeigt, sind die Fahrzeuge 1 wegen der vier, jeweils von einem Antrieb 30 angetriebenen omnidirektionalen Räder bei der Kurvenfahrt ohne Verdrehung bewegbar.

Nach Durchfahren der Nebengasse unterfährt das Fahrzeug 1 eine Last 4 und nimmt diese auf, indem eine Oberplatte des Fahrzeugs 1 angehoben wird. Das Anheben erfolgt mittels eines am Fahrzeug 1 angeordneten und somit vom Fahrzeug mitzubewegenden Hubwerks. An der Unterseite des Fahrzeugs 1 ist eine Sekundärwicklung angeordnet, die mit einem in der Hauptgasse langgestreckt verlegten Primärleiter oder mit einem an der Hebebühne 2 angeordneten Primärleiter induktiv koppelbar ist. Bei Beaufschlagung des Primärleiters mit einem mittelfrequenten Strom, der eine Frequenz zwischen 10 kHz und 1MHz aufweist, ist somit Energie ans Fahrzeug übertragbar.

Die Sekundärwicklung ist dabei am Fahrzeug mit einer Kapazität derart seriell oder parallel verbunden, dass die Resonanzfrequenz des so gebildeten Schwingkreises im Wesentlichen der Frequenz des in den Primärleiter eingeprägten mittelfrequenten Stromes entspricht. Auf diese Weise ist eine genaue Positionierung des Fahrzeugs relativ zum Primärleiter nicht notwendig und trotzdem ein hoher Wirkungsgrad bei der induktiven Übertragung elektrischer Leistung erreichbar.

Das Fahrzeug weist einen Energiespeicher auf, der auf diese Weise aufladbar ist. Die Durchfahrt durch die Nebengasse beziehungsweise das Unterfahren der Last 4 erfolgt durch Versorgung der Antriebe 30 aus dem Energiespeicher.

Die Lasten 4 sind im Regallager jeweils aufgebockt angeordnet, so dass ein Unterfahren der jeweiligen Last 4 mittels des Fahrzeugs 1 bei eingefahrenem Hubwerk ausführbar ist.

Damit ein Durchfahren der Bahnkurve, ein Durchfahren der Hauptgasse und Nebengasse ohne ein Verdrehen des Fahrzeugs 1 ausführbar ist, muss jedes der vier omnidirektionalen Räder 20 einzeln von einem jeweiligen Antrieb 30 antreibbar sein.

Der Antrieb 30 ist jeweils als Elektromotor, wie Synchronmotor oder Asynchronmotor, ausführbar. In Ausführungsbeispielen sind auch Getriebemotoren verwendbar.

Bei einem weiteren erfindungsgemäßen Ausführungsbeispiel ist statt des gerundeten Abbiegens, wie in Figur 5 gezeigt, auch ein rechtwinkliges Abbiegen ermöglicht. Hierzu wird das Fahrzeug bei der Geradeausfahrt, beispielsweise in der Hauptgasse, abgebremst und angehalten. Danach wird die Querfahrt, also das Einfahren in die Nebengasse eingeleitet, indem das Fahrzeug 1 beschleunigt wird. Das somit notwendige Abbremsen und Beschleunigen ist jedoch zeitaufwändiger als das vorgenannte Durchfahren einer gerundeten Bahnkurve 50.

### Bezugszeichenliste

1 Fahrzeug
2 Hebebühne
3 Primärleiter
4 Last
20 omnidirektionales Rad
21 Primärleiter
30 Antrieb, insbesondere Elektromotor
50 Bahnkurve von Hauptgasse zur Nebengasse

## Patentansprüche

1. Lagersystem mit einem Fahrzeug (1) **und Regallager,** wobei Lasten (4) vom Fahrzeug aufnehmbar sind,
**wobei das Regallager** mehrere Stockwerke, **eine Hebebühne (2) und** mindestens eine Haupt- und eine Nebengasse aufweist,
**wobei** das Fahrzeug (1) omnidirektionale Räder (20) aufweist,
**dadurch gekennzeichnet, dass** jedes omnidirektionale Rad (20) einen Antrieb (30) aufweist,
**wobei an der Unterseite des Fahrzeugs (1) eine Sekundärwicklung angeordnet ist, die mit einem in** der **Hebebühne (2) und mit einem in** den Gassen **angeordneten Primärleiter (3) induktiv koppelbar ist,**
**wobei eine Kapazität mit der Sekundärwicklung derart in Reihe oder parallel zugeschaltet ist, dass die Resonanzfrequenz des so gebildeten Schwingkreises der Frequenz des in den Primärleiter (3) eingeprägten Stromes** entspricht,
sodass entlang einer Bahnkurve (50) des Fahrzeugs beim Abbiegen von der Hauptgassenfahrt zur Nebengassenfahrt das Fahrzeug sich nicht dreht und der Schwerpunkt des Fahrzeugs sich aber auf der Bahnkurve bewegt.

2. Lagersystem nach Anspruch 1,
**dadurch gekennzeichnet, dass**
das Fahrzeug (1) eine Länge und eine Breite aufweist, wobei der Betrag der Länge größer ist **als** der Betrag der Breite.

3. Lagersystem nach mindestens einem der vorangegangenen Ansprüche,
**dadurch gekennzeichnet, dass**
die Hauptgasse mindestens so breit ist wie die Länge des Fahrzeugs (1).

4. Lagersystem nach mindestens einem der vorangegangenen Ansprüche,
**dadurch gekennzeichnet, dass**
die Nebengasse mindestens so breit ist wie die Breite **des Fahrzeugs (1)** und weniger breit ist wie die Länge **des Fahrzeugs (1).**

5. Lagersystem nach mindestens einem der vorangegangenen Ansprüche,
**dadurch gekennzeichnet, dass**
das Fahrzeug (1) ein Hubwerk aufweist, so dass eine Last (4) durch Unterfahren mit dem Fahrzeug (1) und nachfolgendem Anheben des Hubwerks **des Fahrzeugs (1)** ausführbar ist.

6. Verfahren zum Betreiben eines Lagersystems nach mindestens einem der vorangegangenen Ansprüche,
wobei das Fahrzeug (1) von einer Geradeausfahrt über eine Kurve in eine Querfahrt gebracht wird, wobei das Fahrzeug (1) relativ zu stationär angeordneten Teile des Lagersystems nicht gedreht wird, oder
dass **das Fahrzeug (1) von einer Geradeausfahrt durch Abbremsen, Anhalten und nachfolgendes Beschleunigen in Querrichtung in eine Querfahrt gebracht wird, wobei das Fahrzeug (1) relativ zu stationär angeordneten Teile des Lagersystems nicht gedreht** wird.

## Claims

1. A storage system having a vehicle (1) and storage rack, wherein loads (4) can be received by the vehicle,
wherein the storage rack has a plurality of storeys, a lifting platform (2) and at least one main aisle and one side aisle,
wherein the vehicle (1) has omnidirectional wheels (20),
**characterised in that**
each omnidirectional wheel (20) has a drive (30),
wherein a secondary winding is arranged at the underside of the vehicle (1), which winding can be inductively coupled to a primary conductor (3) arranged in the lifting platform (2) and to a primary conductor (3) arranged in the aisles,
wherein a capacitor is connected to the secondary winding in series or in parallel in such a manner that the resonant frequency of the oscillating circuit thus formed corresponds to the frequency of the current applied to the primary conductor (3), so that along a track curve (50) of the vehicle upon turning off from the main aisle travel to the side aisle travel, the vehicle does not rotate and yet the centre of gravity of the vehicle moves on the track curve.

2. A storage system according to claim 1,
**characterised in that**
the vehicle (1) has a length and a width, wherein the amount of the length is greater than the amount of the width.

3. A storage system according to at least one of the preceding claims,
**characterised in that**
the main aisle is at least as wide as the length of the vehicle (1).

4. A storage system according to at least one of the preceding claims,
**characterised in that**
the side aisle is at least as wide as the width of the vehicle (1) and is less wide than the length of the vehicle (1).

5. A storage system according to at least one of the preceding claims,
**characterised in that**
the vehicle (1) has lifting gear, so that a load (4) can be realised by the vehicle (1) travelling underneath it and subsequent raising of the lifting gear of the vehicle (1).

6. A method of operating a storage system according to at least one of the preceding claims, wherein the vehicle (1) is brought into transverse travel from straight-ahead travel via a curve, wherein the vehicle (1) is not rotated relative to stationarily-arranged parts of the storage system, or in that the vehicle (1) is brought into transverse travel from straight-ahead travel by braking, stopping and subsequent acceleration in a transverse direction,
wherein the vehicle (1) is not rotated relative to stationarily-arranged parts of the storage system.

## Revendications

1. Système d'entreposage comprenant un véhicule (1) et un magasin à rayonnages, ledit véhicule étant apte à recevoir des charges (4),
ledit magasin à rayonnages comportant plusieurs étages, une plate-forme élévatrice (2) et au moins des travées principale et secondaire,
le véhicule (1) étant muni de roues omnidirectionnelles (20),
**caractérisé par le fait que**
chaque roue omnidirectionnelle (20) est dotée d'un entraînement (30),
sachant qu'un enroulement secondaire, disposé à la face inférieure du véhicule (1), peut être couplé par induction à des conducteurs primaires (3) situés, respectivement, dans la plate-forme élévatrice (2) et dans les travées,
un condensateur étant connecté audit enroulement secondaire, en série ou en parallèle, de façon telle que la fréquence de résonance du circuit oscillant ainsi formé corresponde à la fréquence du courant injecté dans le conducteur primaire (3),
de telle sorte que le véhicule ne vire pas, lors de la bifurcation passant du déplacement dans la travée principale au déplacement dans la travée secondaire le long d'une trajectoire courbe (50) dudit véhicule, mais que le centre de gravité dudit véhicule se meuve toutefois sur ladite trajectoire courbe.

2. Système d'entreposage selon la revendication 1,
**caractérisé par le fait que**
le véhicule (1) présente une longueur et une largeur, la valeur de ladite longueur étant supérieure à la valeur de ladite largeur.

3. Système d'entreposage selon au moins l'une des revendications précédentes, **caractérisé par le fait que**
la largeur de la travée principale équivaut au moins à la longueur du véhicule (1).

4. Système d'entreposage selon au moins l'une des revendications précédentes, **caractérisé par le fait que**
la largeur de la travée secondaire équivaut au moins à la largeur du véhicule (1) et est moindre que la longueur dudit véhicule (1).

5. Système d'entreposage selon au moins l'une des revendications précédentes, **caractérisé par le fait que**
le véhicule (1) est équipé d'un mécanisme de levage, de sorte qu'une charge (4) peut être enlevée par engagement sous-jacent dudit véhicule (1) et par soulèvement consécutif dudit mécanisme de levage du véhicule (1).

6. Procédé d'actionnement d'un système d'entreposage conforme à au moins
l'une des revendications précédentes,
sachant
que le véhicule (1) est amené d'un déplacement en ligne droite à un déplacement transversal, en transitant par une courbe,
aucun virage n'étant alors imprimé audit véhicule (1) par rapport à des parties du système d'entreposage implantées de manière stationnaire, ou bien
que ledit véhicule (1) est amené d'un déplacement en ligne droite à un déplacement transversal par freinage, immobilisation et accélération consécutive dans la direction transversale,
aucun virage n'étant alors imprimé audit véhicule (1) par rapport à des parties dudit système d'entreposage implantées de manière stationnaire.
